# EUROPÄISCHE PATENTSCHRIFT

(11) **EP 1 440 869 B1**
(45) Veröffentlichungstag und Bekanntmachung des Hinweises auf die Patenterteilung: **12.12.2007**
(21) Anmeldenummer: 03100153.0
(22) Anmeldetag: 27.01.2003
(51) Int. Cl.: B62D 25/06

(54) **Hinterer Dachaufbau eines Kraftfahrzeuges**
Rear roof construction of a vehicle
Structure de toit arrière pour un véhicule

(43) Veröffentlichungstag der Anmeldung: 28.07.2004
(73) Patentinhaber: Ford Global Technologies, LLC, Dearborn, MI 48126 (US)
(72) Erfinder: Huhn, Henrik M., 40235, Düsseldorf (DE); Kuehn, Gerald, 50259, Pulheim (DE)
(74) Vertreter: Drömer, Hans-Carsten

(56) Entgegenhaltungen:
- DE-C- 19 813 393
- PATENT ABSTRACTS OF JAPAN vol. 1995, no. 07, 31. August 1995 (1995-08-31) & JP 07 096746 A (ARACO CORP), 11. April 1995 (1995-04-11)
- PATENT ABSTRACTS OF JAPAN vol. 007, no. 179 (M-234), 9. August 1983 (1983-08-09) & JP 58 081867 A (TOYO KOGYO KK), 17. Mai 1983 (1983-05-17)

## Beschreibung

Die Erfindung betrifft einen hinteren Dachaufbau eines Kraftfahrzeuges mit einer Heckklappe gemäß dem Oberbegriff des Anspruches 1.

Ein gattungsgemäßer Dachaufbau ist in Figur 4 dargestellt, und wird ebenso in der JP 07-96746 gezeigt. Der hintere Dachaufbau weist im wesentlichen einen hinteren Dachrahmen, der zumindest aus einer Oberschale besteht, und ein Dachteil, welches mit der Oberschale verbunden ist, auf. Am Dachrahmen ist eine Heckklappe angeschlagen. Zwischen hinterem Dachteil und Heckklappe ist eine Sichtschutzstufe im Dachaufbau vorhanden, die in der Regel vom Dachteil gebildet wird. Die Heckklappe ragt mit ihrem vorderen Flansch über diese Sichtschutzstufe, so daß von außen ein Betrachter nur einen homogenen Spalt zwischen der hinteren Dachkante und der vorderen Kante der Heckklappe mit einer gleichmäßig darunterliegenden Sichtschutzstufe wahrnimmt.

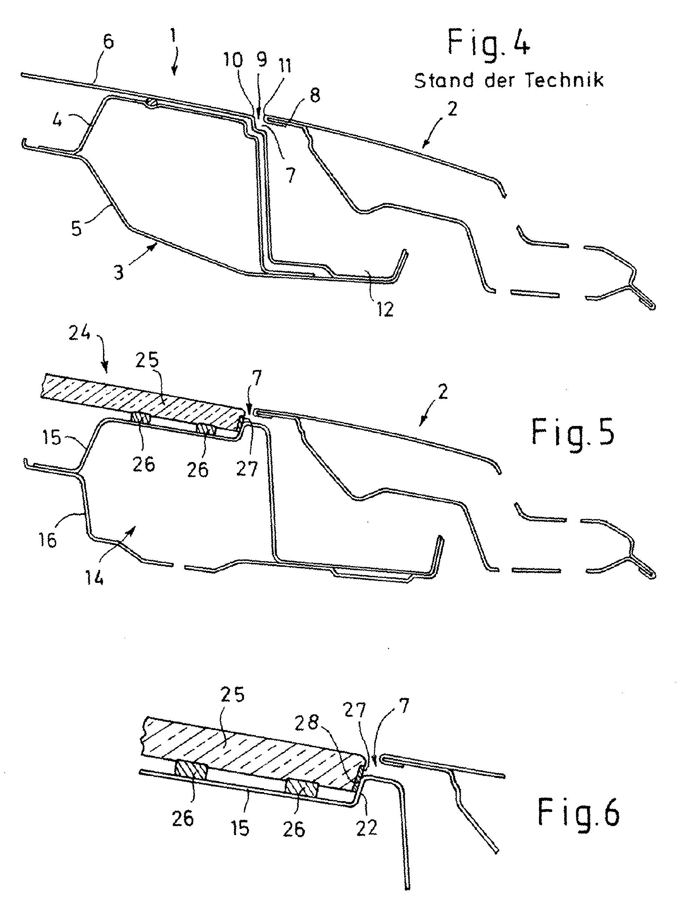

Damit das Dachteil, welches die Sichtschutzstufe aufweist, mit der Oberschale des Dachrahmens verbunden werden kann, muß sich das Dachteil wesentlich über den Bereich der Sichtschutzstufe erstrecken. Das in Fig. 4 gezeigte Dach bildet im hinteren Bereich auch noch einen Wasserkanal. Fertigungstechnisch erwünscht wäre jedoch, das Dachblech möglichst wenig über die hintere Dachkante zu erstrecken. Dies zum einen, um Material zu sparen. Zum anderen fällt die Anbindung des Dachteils an die seitlichen Dachrahmen leichter, wenn sich das Dach nicht so weit hinter die hintere Dachkante erstreckt. Weiterhin ist es bei dieser Lösung schwierig, das Dachteil gegen ein Dachmodul, das z.B. aus Glas oder Kunststoff besteht, auszutauschen, da auf jeden Fall im Bereich der Sichtschutzstufe ein entsprechendes geformtes Dachteil vorhanden sein muß.

Aufgabe der Erfindung ist es deshalb, einen Dachaufbau zu schaffen, der es erlaubt, eine Sichtschutzstufe mit wenig Fertigungs- und Materialaufwand auszubilden. Eine weitere Aufgabe der Erfindung ist es, bei gleichem Dachrahmen, aber unterschiedlichen Dachteilen eine Sichtschutzstufe zu ermöglichen, vor allem wenn auch wahlweise Dachmodule als Dachteil verwendet werden.

Gelöst wird diese Aufgabe mit den Merkmalen des Anspruchs 1.

Wenn die Sichtschutzstufe gebildet wird, indem ein überwiegend senkrecht ausgerichteter Sichtrand des Dachteiles und eine überwiegend waagerecht ausgerichtete Sichtfläche der Oberschale zusammenwirken, kann die Sichtschutzstufe mit wenig Fertigungs- und Materialaufwand hergestellt werden. Der hintere Dachrahmen besteht dann hauptsächlich aus der Oberschale, kann aber, wie aus dem Stand der Technik bekannt, auch mehrschalig ausgeführt sein. Das Dachteil weist dann hinter der hinteren Dachkante nur noch den Sichtrand auf und ist dadurch in seinem hinteren Bereich mit dem geringst möglichen Materialaufwand hergestellt. Zwischen Sichtrand und Sichtfläche bildet sich ein Spalt aus, der entweder durch bekannte Dichtungsmaßnahmen, Verklebungen und/oder durch geeignete Schweiß- oder Lötverfahren geschlossen werden kann.

Ein weiterer Vorteil bei dieser Anordnung ist, daß jetzt eine Sichtschutzstufe entsteht, die durch zwei unterschiedliche Bauteile - Dachteil und Oberschale - gebildet ist, indem beide Bauteile jeweils zu einer Abmessung beitragen, das Dachteil mit dem Sichtrand die überwiegend vertikale Ausdehnung und die Oberschale mit der Sichtfläche die überwiegend horizontale Ausdehnung. Es ist sofort ersichtlich, daß nun die Abmessungen der Sichtschutzstufe beliebig klein und beliebig groß gemacht werden können, ohne daß in einem Bauteil bestimmte Fertigungsrestriktionen eingehalten werden müssen, wie z. B. kleinste oder größte Dicke des Dachteiles, kleinste mögliche Radien in der Sichtschutzstufe. Indem z. B. der Sichtrand des Dachteiles auf der Sichtfläche des Oberschale (konstruktiv) verschoben wird, läßt sich jede beliebige Breite der Sichtschutzstufe einstellen.

Bevorzugt ist der Sichtrand durch einen nach unten abgewinkelten Randflansch des Dachteiles gebildet, wobei der Randflansch zumindest abschnittsweise die Oberschale berührt. Damit kann die hintere Dachkante im Bereich der Sichtschutzstufe mit wenig Aufwand sehr scharfkantig, d. h. mit kleinem Biegeradius ausgeführt werden. Dies ist vor allem erwünscht, um eine bessere optischen Eindruck im Spalt zwischen Heckklappe und Dachteil zu erzielen. Wenn das Dachteil eine Stufe, wie aus dem Stand der Technik bekannt, aufweist, ist eine solche Stufe bei Tiefziehteilen nur sehr aufwendig mit derartig kleinen Biegeradien herzustellen.

Diese Ausführung wird vor allem angewendet, wenn das Dachteil einteilig ausgeführt ist, z. B. aus einem Tiefziehblech oder einer faserverstärkten Kunststoffschale. Dabei kann sich an den Randflansch in seinem unteren Rand ein Abschlußflansch anschließen, wobei der Abschlußflansch beliebig gegenüber dem Randflansch geneigt sein kann, und er sich auch nach vorne - in Fahrzeugrichtung gesehen - und auch bedingt nach hinten erstrecken kann.

Bevorzugt erfolgt die Verbindung zwischen Randflansch und Oberschale mittels eines Fügeverfahrens aus der Gruppe der Fügeverfahren Laserschweißung, Laserlötung und Elektronenstrahlschweißung. Dabei ist zwischen Sichtrand des Dachteils und Sichtfläche der Oberschale der Spalt so zu gestalten, daß er mittels der hier genannten Fügeverfahren mittels einer Schweiß- bzw. Lötnaht geschlossen werden kann. Die entsprechenden Schweißanlagen können auf einfache Weise von der Außenseite des Fahrzeuges angewendet werden, es ist kein umständlicher Zugang vom Innenraum des Fahrzeuges notwendig.

Anwenden lassen sich diese Fügeverfahren für den erfindungsgemäßen Dachaufbau bei allen Werkstoffen und Werkstoffkombinationen von Dachteil und Oberschale, die für diese Fügeverfahren auch prinzipiell geeignet sind, d. h. Stähle, Aluminium und sonstige Metalle, aber auch thermisch schweißbare Kunststoffe. Mittels dieser Fügeverfahren lassen sich, vor allem bei kleinen Spalten zwischen Sichtrand und Sichtfläche, optisch sehr ansprechende Nähte erstellen, die, in der Sichtschutzstufe angeordnet dem Betrachter nicht sofort ins Auge fallend, keiner weiteren Nachbearbeitung bedürfen. Auch kann die Notwendigkeit entfallen, im Bereich dieser Nähte weitere Dichtoperationen, vor allem gegen Wasser, durchzuführen, da derartige Nähte ohne großen Aufwand wasserdicht ausgeführt sein können.

Die Verbindung zwischen Randflansch und Oberschale kann auch durch Verklebung erfolgen. Hier kann jedes bekannte Klebeverfahren angewendet werden, um eine entsprechende strukturelle und/oder dichtende Verbindung zwischen dem Randflansch und Oberschale zu schaffen.

In einer weiteren bevorzugten Ausführung ist das Dachteil ein Dachmodul und der Sichtrand der hintere Rand des Dachmoduls. Ein solches Dachmodul kann z. B. ein Kunststoffdach sein, welches in der Endmontage des Fahrzeuges, wenn die Karosserie bereits lackiert ist, in die dann noch offene Dachöffnung des Fahrzeuges eingesetzt und durch ein entsprechendes Fügeverfahren mit dem Dachrahmen verbunden wird. Das erfinderische Konzept beinhaltet, daß ein Dachmodul jederzeit, also auch im Rohbau der Karosserie, oder nachträglich, wenn das Fahrzeug bereits das Herstellerwerk verlassen hat, oder als Sonderausstattung beim Kunden, eingesetzt werden kann. Dabei können im Rohbau für die Verbindung von Dachmodul und Oberschale auch Fügeverfahren wie Schweißen zum Einsatz kommen, während später, wenn die Karosserie lackiert ist, vorteilhaft Fügeverfahren mit keinem oder geringem Wärmeeintrag wie z. B. Kleben in Frage kommen. Sowohl im Rohbau als auch beim späteren Einbau des Dachmoduls können auch alle anderen passenden Fügeverfahren eingesetzt werden wie Schrauben, Nieten, Durchsetzfügen, Clipsen, Klemmen.

Die Erfindung kann auch angewendet werden, wenn das Dachmodul eine Abdeckung im hinteren Dachbereich ist. Es gibt modulare Dachsysteme, z. B. für Schiebedächer an Großraumlimousinen, die geteilt sind. In einem solchen Fall besteht das hintere Dachmodul nur aus einer mehr oder weniger großen Abdeckung, die eine Verbindung zwischen hinterem Dachrahmen und dem vorwiegend im vorderen Dachbereich befindlichen Schiebedach. Vorteilhaft kann mittels der Erfindung eine derartige Abdeckung am hinteren Dachrahmen befestigt werden, und erhält damit die vorteilhafte Sichtschutzstufe.

Vorteilhaft besteht das Dachmodul zumindest teilweise aus einem durchsichtigen Material. Zunehmend werden Dächer von Fahrzeugen ganz oder teilweise verglast. In solchen Fällen bestünde das Dachmodul im wesentlichen aus einer entsprechend gestalteten Glasscheibe. Dabei bildet der hintere Rand der Glasscheibe und eine darunterliegende Verklebung mit der Oberschale den hinteren Sichtrand.

Eine weitere vorteilhaft Ausgestaltung sieht vor, daß sich an die Sichtfläche der Oberschale ein Anlageflansch anschließt. Dabei kann der Anlageflansch senkrecht nach oben oder nach unten verlaufen, oder er kann geneigt sein, wobei er bevorzugt überwiegend vertikal ausgerichtet ist, und er kann, wenn er geneigt ist, nach vorne oder nach hinten - in Fahrzeugrichtung gesehen - geneigt sein. Ein nach unten geneigter Anlageflansch eignet sich dafür, den Randflansch eines Dachteiles oder den hinteren Rand eines Dachmoduls von vorne an den Anlageflansch anschlagen zu lassen. Ein nach oben geneigter Anlageflansch eignet sich dafür, den Randflansch eines Dachteiles von hinten an den Anlageflansch anschlagen zu lassen. In allen Fällen wird so eine exakte Ausrichtung in Fahrzeuglängsrichtung von Dachteil und Oberschale erreicht; die Sichtschutzstufe kann mit sehr geringen Toleranzen gefertigt werden.

Vorteilhaft kann die Erfindung verwendet werden, um einen oder mehrere der vorab beschriebenen Dachaufbauten in verschiedenen Varianten eines Fahrzeuges einzusetzen, indem in eine Dachöffnung verschiedene Dachteile nach den vorherigen Ansprüchen eingesetzt, wobei der hintere Dachrahmen für alle Varianten gleich ist. Durch die erfinderische Gestaltung der Sichtschutzstufe können verschieden Dachteile und/oder Dachmodule auf die Oberschale aufgesetzt und mit beliebigen Fügeverfahren mit diesen verbunden werden, ohne daß sich die prinzipielle Unterstruktur des hinteren Dachaufbaus, d. h. im wesentlichen der hintere Dachrahmen mit Oberschale, für die verschiedenen Fahrzeugvarianten geändert werden muß. Dies erlaubt in der Fertigung der Karosserien eine wesentlich höher Flexibilität, da alle Fahrzeuge den gleichen hinteren Dachrahmen aufweisen, und erst sehr spät, wenn das Dachteil in den Dachrahmen eingesetzt wird, entschieden werden kann, welches Dachteil bzw. Dachmodul das betreffende Fahrzeug erhält.

Weitere vorteilhafte Ausgestaltungen der Erfindung sind den folgenden Zeichnungen zu entnehmen. Es zeigen:
- Fig.1.: einen Schnitt durch einen erfindungsgemäßen hinteren Dachaufbau mit einem Blechdach;
- Fig. 2: einen vergrößerten Ausschnitt der Sichtschutzstufe aus Figur 2;
- Fig. 3: eine perspektivische Ansicht des erfindungemäßen Dachaufbaus aus Fig. 1;
- Fig. 4: einen Schnitt durch einen hinteren Dachaufbau nach dem Stand der Technik;
- Fig.5: einen Schnitt durch einen hinteren Dachaufbau mit einem Glasdach;
- Fig. 6: einen vergrößerten Ausschnitt der Sichtschutzstufe aus Figur 5;
- Fig.7: eine weitere Variante, bei der ein Abschlußflansch auf der Oberschale aufliegt;
- Fig. 8: eine weitere Variante, bei der ein Randflansch von hinten an einer Stufe der Oberschale anliegt;
- Fig. 9: eine weitere Variante, bei der ein Glasdach ohne Längsanschlag auf der Oberschale aufliegt; und
- Fig. 10: eine weitere Variante, bei der ein Kunststoffdach auf der Oberschale festgeschraubt ist.

Der Stand der Technik ist in Figur 4 gezeigt. Der hintere Dachaufbau 1 - zur besseren Darstellung ist auch eine Heckklappe 2 gezeigt, die jedoch nicht zum Dachaufbau gehört - besteht im wesentlichen aus einem hinteren Dachrahmen 3, der aus einer Oberschale 4 und einer Unterschale 5 zusammengesetzt ist, und einem Dachteil 6, welches mit der Oberschale 4 verbunden ist. Am Dachrahmen 3 ist die Heckklappe 2 mittels Scharnieren - hier nicht dargestellt - angeschlagen. Im Bereiche zwischen Dachteil 6 und Heckklappe 2 weist der Dachaufbau 1 eine Sichtschutzstufe 7 auf, die beim Stand der Technik vom Dachteil 6 gebildet wird. Die Heckklappe 2 ragt mit ihrem vorderen Flansch 8 über diese Sichtschutzstufe 7, so daß von außen ein Betrachter nur einen homogenen Spalt 9 zwischen der hinteren Dachkante 10 und der Vorderkante 11 des Heckklappenflansches 8 mit einer gleichmäßig darunter verlaufenden Sichtschutzstufe 7 wahrnimmt.

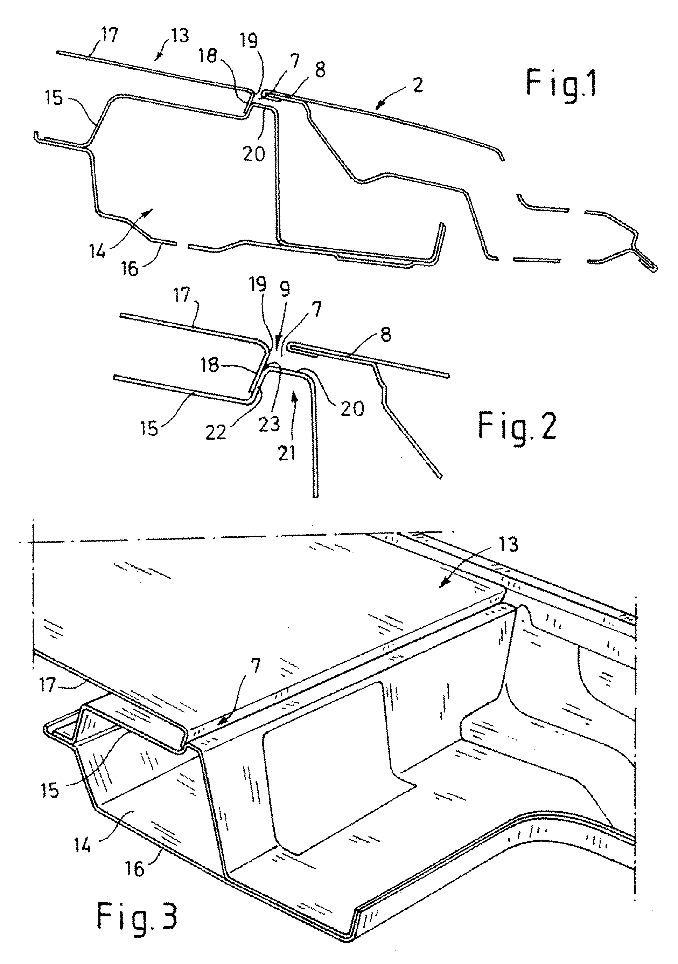

Damit das Dachteil 6 mit der Oberschale 4 des Dachrahmens verbunden werden kann, muß es sich wesentlich über den Bereich der Sichtschutzstufe 7 erstrecken. Das in Fig. 1 gezeigte Dachteil 6 bildet hinter der Sichtschutzstufe 7, unter der Heckklappe 2 einen Wasserkanal 12, und ist in diesem Bereich mit der Unterschale 5 des Dachrahmens 3 verbunden.

Ein erfindungsgemäßer hinterer Dachaufbau ist in den Fig. 1, 2 und 3 dargestellt, wobei Fig. 1 eine allgemeiner Schnitt, Fig. 2 die vergrößerte Darstellung des Sichtschutzstufe und Fig. 3 eine perspektivische Darstellung ist. Der Dachaufbau 13 besteht im wesentlichen aus einem hinteren Dachrahmen 14, der aus einer Oberschale 15 und einer Unterschale 16 zusammengesetzt ist, und einem Dachteil 17. Das Dachteil 17 weist an seinem hinteren Rand den überwiegend nach unten geneigten Randflansch 18 auf, der einen Sichtrand 19 bildet. Durch das Zusammenwirken des Sichtrands 19 mit einer Sichtfläche 20 der Oberschale 15 entsteht die Sichtschutzstufe 7. Der vordere Randflansch 8 der Heckklappe 2 ragt über die Sichtfläche 20. Ein Betrachter sieht jetzt, wenn er in den Spalt 9 zwischen Dachaufbau 13 und Heckklappe 2 sieht, im wesentlichen nur die Sichtschutzstufe 7.

Die Oberschale 15 bildet im Bereich der Sichtfläche 20 einen erhöhten Absatz 21, indem sich vor der Sichtfläche 20 ein schräg nach unten verlaufender Anlageflansch 22 der Oberschale 15 anschließt. An diesen Anlageflansch 22 liegt der Randflansch 18 des Dachteils 17 an, wodurch sich im Bereich des Überganges zwischen Sichtfläche 20 und Sichtrand 19 eine Hohlkante bildet. In dieser Hohlkante sind Dachteil 17 und Oberschale 15 durch die Kehlnaht 23 verbunden. Diese Kehlnaht 23 entsteht bevorzugt durch Laserlöten, sie kann jedoch auch durch eine Verklebung entstehen, wenn Kleber auf dem Anlageflansch 22 und Randflansch 18 beim Anlegen von Anlageflansch 22 und Randflansch 18 in die Hohlkante gedrückt wird. Die Kehlnaht 23 kann auch entstehen, wenn nach einem Fügen von Dachteil 17 und Oberschale 15 zusätzlich eine Klebe- und/oder Dichtnaht in die Hohlkante eingebracht wird.

Ein Vorteil dieser Konfiguration mit am Anlageflansch 22 anliegendem Randflansch 18 ist, daß das Dachteil 17 gegenüber dem Dachrahmen 14 in Fahrzeuglängsrichtung sehr exakt positioniert werden kann, indem das Dachteil 17 bei der Montage einfach gegen den Anlageflansch 22 geschoben wird, und somit in Längsrichtung sich die Lage des Dachteiles 17 gegenüber dem Dachrahmen 14 ohne weitere Positioniervorrichtungen automatisch ergibt.

Fig. 5 und 6 zeigen einen Schnitt durch einen weiteren erfinderischen Dachaufbau 24 mit einem Glasdach 25, wobei Fig. 6 einen vergrößerten Ausschnitt der Sichtschutzstufe 7 aus Figur 5 zeigt. Der Dachrahmen 14 mit Oberschale 15 und Unterschale 16 ist der Gleiche wie in Fig. 1, ebenso die Heckklappe 2. Das Glasdach 25 ist mittels zweier Klebe- und Dichtnähte 26 mit der Oberschale 16 verbunden. Der Sichtrand 27 wird gebildet durch den hinteren Rand des Glasdaches 25. Zur besseren Abdichtung ist auf dem hinteren Rand des Glasdaches 25 ein Dichtungsstreifen 28 aufgebracht, der gegen den Anlageflansch 22 der Oberschale drückt und somit die Abdichtung in der Sichtschutzstufe 7 sicherstellt.

Aus dem Vergleich von Fig. 1 und Fig. 5 ist die Eignung des erfindungsgemäßen Dachaufbaus für verschiedene Dachformen ersichtlich. Ohne daß am Unterbau, hier der Dachrahmen 14, etwas geändert werden muß, kann sowohl das Dachteil 6 aus Fig. 1 als auch das Glasdach 25 in die Dachöffnung eingesetzt werden.

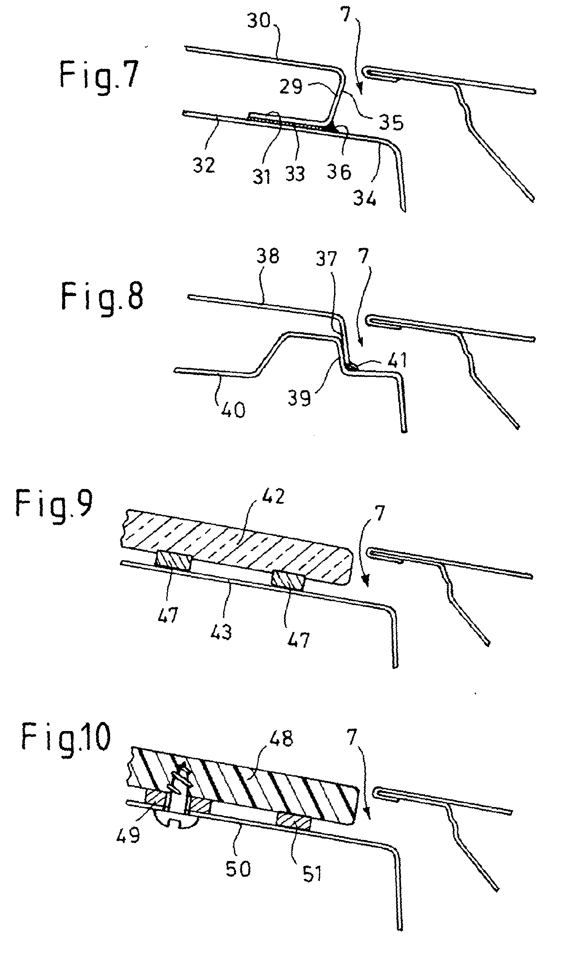

In den Fig. 7 bis 10 sind weitere erfindungsgemäße Dachaufbauten gezeigt, wobei immer nur ein Ausschnitt im Bereich der Sichtschutzstufe 7 dargestellt ist.

In Fig. 7 weist der Randflansch 29 des Dachteils 30 einen überwiegend waagerecht verlaufenden Abschlußflansch 31 auf, wobei der Abschlußflansch 31 auf der Oberschale 32 aufliegt und mittels Verklebung 33 mit dieser verbunden ist. Anstatt oder zusätzlich zur Verklebung 33 kann im Bereich der Hohlkante zwischen Sichtfläche 34 und Sichtrand 35 eine Kehlnaht 36 durch Laserlöten erzeugt werden.

In Fig. 8 liegt der Randflansch 37 des Dachteils 38 hinter - in Fahrzeugrichtung gesehen - einem Anlageflansch 39 der Oberschale 40. Auch hier kann das Dachteil ohne zusätzliche Positioniervorrichtungen in Fahrzeuglängsrichtung exakt zum Dachrahmen ausgerichtet werden, indem der Randflansch 37 bündig am Anlageflansch 39 anliegt. Mittels einer Lötnaht 41 sind Dachteil 38 und Oberschale 40 verbunden.

Fig. 9 zeigt eine Ausführung mit Glasdach 42, bei der die Oberschale 43 keinen Anlageflansch aufweist, sondern das Glasdach frei auf der Oberschale 43 ausgerichtet und mittels der Verklebungen 47 verbunden ist.

Fig. 10 zeigt ein Dachmodul 48 aus Kunststoff, daß mittels einer Verschraubung 49 mit der Oberschale 50 verbunden ist. Zur Abdichtung ist zwischen Dachmodul 48 und Oberschale 50 ein Dichtstreifen 51 eingelegt.

Es versteht sich von selbst, daß alle hier gezeigten und besprochenen Ausführungsformen beliebig in geeigneter Weise kombiniert werden können, um die erfinderische Aufgabe zu lösen.

## Patentansprüche

1. Hinterer Dachaufbau (1, 13, 24) eines Kraftfahrzeuges mit einer Heckklappe (2), die an einem hinteren Dachrahmen (14) anschlagbar ist, wobei der hintere Dachrahmen (14) zumindest aus einer Oberschale (15, 32, 40, 43, 50) besteht, und ein Dachteil (17, 25, 30, 38, 42, 48) mit der Oberschale (15, 32, 40, 43, 50) verbunden ist, wobei der Dachaufbau (1) im Bereich zwischen hinterem Dachteil und Heckklappe (2) eine Sichtschutzstufe (7) aufweist,
**dadurch gekennzeichnet, daß**
die Sichtschutzstufe (7) gebildet wird, indem ein überwiegend senkrecht ausgerichteter Sichtrand (19, 27, 35) des Dachteiles (17, 25, 30) und eine überwiegend waagerecht ausgerichtete Sichtfläche der Oberschale (20, 34) zusammenwirken.

2. Dachaufbau nach Anspruch 1,
**dadurch gekennzeichnet, daß**
der Sichtrand (19, 25) durch einen nach unten abgewinkelten Randflansch (18, 29) des Dachteiles (17, 30) gebildet ist, wobei der Randflansch (18, 29) zumindest abschnittsweise mit der Oberschale (15, 32) verbunden ist.

3. Dachaufbau nach Anspruch 2,
**dadurch gekennzeichnet, daß**
der Randflansch (29) in seinem unteren Rand einen Abschlußflansch (31) aufweist.

4. Dachaufbau nach einem der vorherigen Ansprüche,
**dadurch gekennzeichnet, daß**
die Verbindung zwischen Randflansch (18, 29, 37) und Oberschale (15, 32, 40) mittels eines Fügeverfahrens aus der Gruppe der Fügeverfahren Laserschweißung, Laserlötung und Elektronenstrahlschweißung erfolgt.

5. Dachaufbau nach einem der vorherigen Ansprüche,
**dadurch gekennzeichnet, daß**
die Verbindung zwischen Randflansch (18, 29, 37) und Oberschale (15, 32, 40) durch Verklebung erfolgt.

6. Dachaufbau nach Anspruch 1,
**dadurch gekennzeichnet, daß**
das Dachteil ein Dachmodul (25, 42, 48) ist und der Sichtrand (27) der hintere Rand des Dachmoduls (25, 42, 48) ist.

7. Dachaufbau nach Anspruch 6,
**dadurch gekennzeichnet, daß**
das Dachmodul (48) eine Abdeckung im hinteren Dachbereich ist.

8. Dachaufbau nach Anspruch 6 oder 7,
**dadurch gekennzeichnet, daß**
das Dachmodul (25, 42) zumindest teilweise aus einem durchsichtigen Material besteht.

9. Dachaufbau nach einem der Ansprüche 6 bis 8,
**dadurch gekennzeichnet, daß**
zumindest teilweise die Verbindung zwischen Dachmodul (25, 42, 48) und Oberschale (15, 43, 50) durch Verklebung erfolgt.

10. Dachaufbau nach einem der vorherigen Ansprüche,
**dadurch gekennzeichnet, daß**
sich an die Sichtfläche (20) der Oberschale (15) ein Anlageflansch (22) anschließt.

11. Verwendung von Dachaufbauten nach einem oder mehrerer der vorherigen Ansprüche in verschiedenen Varianten eines Fahrzeuges, indem in eine Dachöffnung des Fahrzeuges verschiedene Dachteile (17, 25, 30, 38, 42, 48) nach den vorherigen Ansprüchen eingesetzt sind, wobei der hintere Dachrahmen (15) für alle Varianten gleich ist.

## Claims

1. Rear roof construction (1, 13, 24) of a motor vehicle comprising a tailgate (2) which may be hinged to a rear roof frame (14), the rear roof frame (14) consisting at least of an upper shell (15, 32, 40, 43, 50) and a roof part (17, 25, 30, 38, 42, 48) being connected to the upper shell (15, 32, 40, 43, 50), the roof construction (1) in the region between the rear roof part and tailgate (2) comprising a vision protection step (7), **characterized in that** the vision protection step (7) is formed by the cooperation of a substantially perpendicularly oriented visible edge (19, 27, 35) of the roof part (17, 25, 30) and a substantially horizontally oriented visible surface of the upper shell (20, 34).

2. Roof construction according to Claim 1, **characterized in that** the visible edge (19, 25) is formed by a downwardly bent edge flange (18, 29) of the roof part (17, 30), the edge flange (18, 29) being at least partially connected to the upper shell (15, 32).

3. Roof construction according to Claim 2, **characterized in that** the edge flange (29) comprises at its lower edge a terminal flange (31).

4. Roof construction according to one of the preceding claims, **characterized in that** the connection between the edge flange (18, 29, 37) and upper shell (15, 32, 40) is carried out by means of a joining method from the group of joining methods which includes laser welding, laser soldering and electron beam welding.

5. Roof construction according to one of the preceding claims, **characterized in that** the connection between the edge flange (18, 29, 37) and the upper shell (15, 32, 40) is carried out by bonding.

6. Roof construction according to Claim 1, **characterized in that** the roof part is a roof module (25, 42, 48) and the visible edge (27) is the rear edge of the roof module (25, 42, 48).

7. Roof construction according to Claim 6, **characterized in that** the roof module (48) is a cover in the rear roof region.

8. Roof construction according to Claim 6 or 7, **characterized in that** the roof module (25, 42) consists at least partially of a transparent material.

9. Roof construction according to one of Claims 6 to 8, **characterized in that** the connection between the roof module (25, 42, 48) and the upper shell (15, 43, 50) is at least partially carried out by bonding.

10. Roof construction according to one of the preceding claims, **characterized in that** a mating flange (22) is attached to the visible surface (20) of the upper shell (15).

11. Use of roof constructions according to one or more of the preceding claims in various variants of a vehicle, by various roof parts (17, 25, 30, 38, 42, 48) according to the preceding claims being inserted into a roof opening of the vehicle, the rear roof frame (15) being the same for all variants.

## Revendications

1. Structure de toit arrière (1, 13, 24) pour un véhicule automobile comportant un hayon (2) qui peut s'accrocher à un cadre de toit arrière (14), dans laquelle le cadre de toit arrière (14) se compose d'au moins une coque supérieure (15, 32, 40, 43, 50), et une partie de toit (17, 25, 30, 38, 42, 48) est reliée à la coque supérieure (15, 32, 40, 43, 50), dans laquelle la structure de toit (1) comporte un épaulement empêchant la vision (7) dans la région comprise entre la partie de toit arrière et le hayon (2), **caractérisée en ce que** l'épaulement empêchant la vision (7) est formé par la coopération d'un bord visible (19, 27, 35) orienté pour l'essentiel verticalement de la partie de toit (17, 25, 30) et d'une face visible de la coque supérieure (20, 34) orientée pour l'essentiel horizontalement.

2. Structure de toit selon la revendication 1, **caractérisée en ce que** le bord visible (19, 25) est formé par une bride de bord (18, 29), coudée vers le bas, de la partie de toit (17, 30), dans laquelle la bride de toit (18, 29) est assemblée au moins localement à la coque supérieure (15, 32).

3. Structure de toit selon la revendication 2, **caractérisée en ce que** la bride de bord (29) présente une bride de fermeture (31) dans son bord inférieur.

4. Structure de toit selon l'une quelconque des revendications précédentes, **caractérisée en ce que** l'assemblage entre la bride de bord (18, 29, 37) et la coque supérieure (15, 32, 40) est réalisé au moyen d'un procédé de jonction du groupe de procédés de jonction comprenant le soudage au laser, le brasage au laser et le soudage par faisceau d'électrons.

5. Structure de toit selon l'une quelconque des revendications précédentes, **caractérisée en ce que** l'assemblage entre la bride de bord (18, 29, 37) et la coque supérieure (15, 32, 40) est réalisé par collage.

6. Structure de toit selon la revendication 1, **caractérisée en ce que** la partie de toit est un module de toit (25, 42, 48) et le bord visible (27) est le bord arrière du module de toit (25, 42, 48).

7. Structure de toit selon la revendication 6, **caractérisée en ce que** le module de toit (48) est un recouvrement dans la région arrière du toit.

8. Structure de toit selon la revendication 6 ou 7, **caractérisée en ce que** le module de toit (25, 42) se compose au moins partiellement d'un matériau transparent.

9. Structure de toit selon l'une quelconque des revendications 6 à 8, **caractérisée en ce que** l'assemblage entre le module de toit (25, 42, 48) et la coque supérieure (15, 43, 50) est au moins en partie réalisé par collage.

10. Structure de toit selon l'une quelconque des revendications précédentes, **caractérisée en ce qu'**une bride d'appui (22) se raccorde à la face visible (20) de la coque supérieure (15).

11. Utilisation de structures de toit selon une ou plusieurs des revendications précédentes dans différentes variantes d'un véhicule, selon laquelle on place différentes parties de toit (17, 25, 30, 38, 42, 48) selon les revendications précédentes dans une ouverture de toit du véhicule, dans laquelle le cadre de toit arrière (14) est le même pour toutes les variantes.
